# EUROPEAN PATENT APPLICATION

(11) **EP 4 533 959 A1**
(43) Date of publication of application: **09.04.2025**
(21) Application number: 22943857.7
(22) Date of filing: 23.12.2022
(51) Int. Cl.: A23L 7/10, A23L 5/00

(54) **FOOD SHAPING DEVICE, CONTROL METHOD OF FOOD SHAPING DEVICE AND CONTROL PROGRAM OF FOOD SHAPING DEVICE**

(30) Priority: 26.05.2022 JP 2022085797
(71) Applicant: Audio-Technica Corporation, Machida-shi, Tokyo 194-8666 (JP)
(72) Inventor: HOSOGANE, Takashi, Machida-shi, Tokyo 194-8666 (JP); KANAMORI, Yoshiki, Machida-shi, Tokyo 194-8666 (JP); YOKOI, Jun, Machida-shi, Tokyo 194-8666 (JP)
(74) Representative: Mathys & Squire
(86) International application number: PCT/JP2022/047589
(87) International publication number: WO 2023/228458

(57) **Abstract**

[Problem] To reliably cut a plate-shaped cooked rice.

[Solution] A food shaping apparatus 1 that shapes a plate-shaped article having a predetermined length, the food shaping apparatus including a shaping unit 4 that shapes cooked rice supplied from a hopper 2 into a plate shape, and a cutting unit 5 that cuts the shaped cooked rice by advancing and retracting a cutter 52 at a discharge port of the cooked rice shaped by the shaping unit, in which the cutting unit presses the cutter multiple times at a same place in one plate-shaped article.

## Description

### Technical Field

The present invention relates to a food shaping apparatus, a control method of the food shaping apparatus, and a control program of the food shaping apparatus.

### Background Art

There is known a food shaping apparatus that shapes an article to be shaped and then cuts a plate-shaped article, which is so-called rice plate, into a predetermined length.

Conventionally, for example, there has been known a food shaping apparatus including an extending unit that extends, by pressure, cooked rice supplied from a hopper into a plate shape, and a shaping unit that shapes the cooked rice extended by the extending unit into a bar shape, in which the rolling unit includes at least two roller pairs of an upper shaping roller pair disposed on an outlet side of the hopper and a lower shaping roller pair disposed on a downstream side of the upper shaping roller pair, and a roller-to-roller distance of the upper shaping roller pair is variable (e.g., refer to Patent Literature 1). In addition, there is disclosed an apparatus for preparing a ball-shaped vegetable that cuts a rhizome portion of a harvested vegetable having a ball-shaped portion, a rhizome portion, and an outer leaf (e.g., refer to Patent Literature 2).

In some cases, rice having various degrees of milling, such as white rice, partially-milled rice, and brown rice, is used as the cooked rice to be shaped. In addition, the hardness of the article to be shaped varies depending on the variety of rice to be supplied. Furthermore, the article to be shaped may be a mixture of cooked rice and an appropriate food, such as rice prepared for sushi or cooked rice mixed with oil. As a result, it may not be possible to reliably cut the shaped article depending on its hardness. For example, since a rice plate of brown rice is harder than a shaped article of white rice, the rice grains separated from the rice plate of brown rice may be stuck to the cutter or dropped below the cutter in some cases. Further, the rice plate may be torn off. In such a food shaping apparatus, it may take time and effort to clean the rice grains. In addition, those remaining rice grains are not used to shape a rice plate, and there is room for improvement in material use efficiency.

### Citation List

### Patent Literature

Patent Literature 1: JP 2008-211992 A
Patent Literature 2: JP 5-174389 A

### Summary of Invention

### Technical Problem

An object of the present invention is to provide a food shaping apparatus capable of reliably cutting plate-shaped cooked rice.

### Solution to Problem

A food shaping apparatus according to the present invention is a food shaping apparatus that shapes a plate-shaped article having a predetermined length, the food shaping apparatus including a shaping unit that shapes cooked rice supplied from a hopper into a plate shape, and a cutting unit that cuts the shaped cooked rice by advancing and retracting a cutter at a discharge port of the cooked rice shaped by the shaping unit, in which the cutting unit presses the cutter multiple times at a same place in one plate-shaped article.

### Advantageous Effects of Invention

According to the present invention, a plate-shaped cooked rice can be reliably cut.

### Brief Description of Drawings

Fig. 1 is a schematic perspective view illustrating an embodiment of a food shaping apparatus according to the present invention.
Fig. 2 is a main part longitudinal section view illustrating an internal structure of the food shaping apparatus.
Fig. 3 is a block diagram illustrating a hardware configuration of the food shaping apparatus.
Fig. 4 is a block diagram illustrating a software configuration of the food shaping apparatus.
Fig. 5 is a timing chart illustrating an example of a first operation in the food shaping apparatus.
In Fig. 6, schematic diagrams illustrate states of a cam follower during the first operation, in which (a) illustrates a state that the cam follower is held at an initial position, (b) illustrates a state that the cam follower is rotated, and (c) illustrates a state that the cam follower returns to the initial position.
In Fig. 7, schematic longitudinal section views illustrate states of a cutter of the food shaping apparatus, in which (a) illustrates the cutter in an advanced state, and (b) illustrates the cutter in a retracted state.
Fig. 8 is a timing chart illustrating an example of a second operation in the food shaping apparatus.
In Fig. 9, schematic views illustrate states of the cam follower in the second operation, in which (a) illustrates a state that the cam follower is held at the initial position, (b) illustrates a state that the cam follower is rotated, (c) illustrates a state that the cam follower is lowered according to reverse rotation of a cutter drive motor, (d) illustrates a state that the cam follower rises according to forward rotation of the cutter drive motor, and (e) illustrates a state that the cam follower returns to the initial position.
Fig. 10 is a timing chart illustrating an example of a third operation in the food shaping apparatus.
In Fig. 11, schematic views illustrate states of the cam follower in the third operation, in which (a) illustrates a state that the cam follower is held at the initial position, (b) illustrates a state that the cam follower is rotated, (c) illustrates a state that the cam follower lowers according to reverse rotation of the cutter drive motor, and (d) illustrates a state that the cam follower returns to the initial position.
Fig. 12 is a flowchart illustrating a first example of control in the food shaping apparatus.
Fig. 13 is a flowchart illustrating a second example of the control in the food shaping apparatus.

### Description of Embodiments

Hereinafter, an embodiment of a food shaping apparatus according to the present invention will be described with reference to the drawings. In the following description, the placement surface of a food shaping apparatus 1 is also referred to as an xy plane, and a direction vertically upward with respect to the xy plane is also referred to as a +z direction. A surface facing the +z direction is also referred to as an upper surface, and a surface facing the - z direction is also referred to as a bottom surface. Further, a surface facing the -y direction is also referred to as a front surface, and a surface facing the +y direction is also referred to as a back surface.

### • Food shaping apparatus •

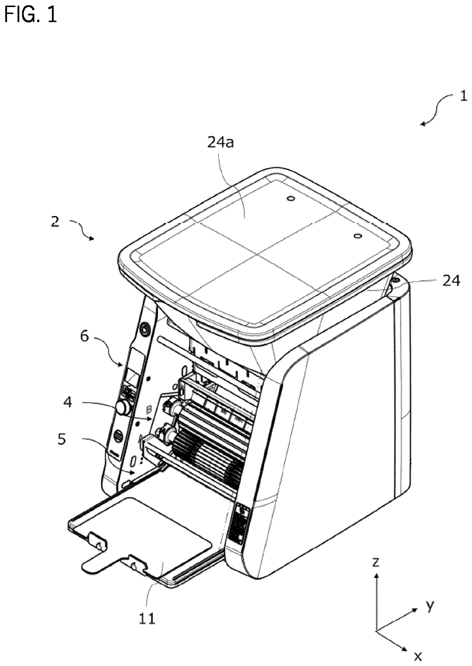

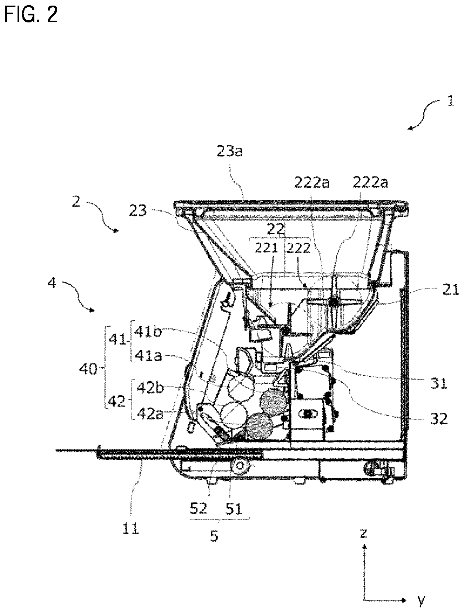

Next, an embodiment of the present invention will be described with reference to the drawings; however, the present invention is not limited thereto. Fig. 1 is a perspective view of a food shaping apparatus according to the embodiment of the present invention, and Fig. 2 is a cross-sectional view schematically illustrating an internal structure thereof. Note that the detailed structure is appropriately omitted in the cross-sectional view.

In Fig. 1, a front panel is removed for easy understanding of the position of a shaping unit and the like inside, but the front panel is actually attached and the shaping unit is not visible.

As illustrated in Figs. 1 and 2, the food shaping apparatus 1 includes a hopper 2 into which cooked rice is put, a shaping unit 4 that shapes the cooked rice supplied from the hopper 2 into a plate shape, a cutting unit 5 that cuts the plate-shaped cooked rice, and an operation panel 6.

As illustrated in Fig. 2, the hopper 2 includes a storage unit 21 that is opened toward an upper portion of the apparatus main body and stores a rice plate therein, and a stirring unit 22 that pushes the rice plate in the storage unit 21 toward the downstream side while stirring the rice plate. A storage container 23 for supplying the rice plate to the hopper 2 is detachably provided in an upper portion of the food shaping apparatus 1. A detachable lid 23a is disposed at an upper end of the storage container 23.

The storage unit 21 is formed in a funnel shape whose volume decreases from the top to the bottom of the apparatus main body. The storage unit 21 has a downstream side opened toward the shaping unit 4 described later. The stirring unit 22 includes two stirring arms 221 and 222 that are rotationally driven via an unillustrated drive means. A plurality of stirring rods 222a is attached to each of the stirring arms 221 and 222 at predetermined intervals. In Fig. 2, the stirring arms 221 and 222 rotate clockwise (right-handed rotation).

The shaping unit 4 is disposed below the hopper 2, that is, on the downstream side, and includes a plurality of shaping rollers 40 for extending, by pressure, the rice plate supplied from the hopper 2. The shaping rollers 40 include, for example, an upper shaping roller pair 41 and a lower shaping roller pair 42. The upper shaping roller pair 41 and the lower shaping roller pair 42 are arranged in parallel to each other. The lower shaping roller pair 42 is disposed on the downstream side (discharging side) of the upper shaping roller pair 41, and further extends, by pressure, the rice plate that is extended by the upper shaping roller pair 41.

The upper shaping roller pair 41 includes a first upper shaping roller 41a and a second upper shaping roller 41b arranged in the front-rear direction (the left and right in Fig. 2) with the rice plate interposed therebetween, and the first upper shaping roller 41a and the second upper shaping roller 41b are arranged to face each other at a predetermined interval.

The lower shaping roller pair 42 includes a first lower shaping roller 42a and a second lower shaping roller 42b arranged in the front-rear direction (the left and right in Fig. 2) with the rice plate interposed therebetween, and the first lower shaping roller 42a and the second lower shaping roller 42b are arranged to face each other at a predetermined interval.

The first upper shaping roller 41a, the second upper shaping roller 41b, the first lower shaping roller 42a, and the second lower shaping roller 42b are made of synthetic resin moldings, and have a gear shape in which a large number of protruding portions are provided in parallel along the axial direction at predetermined intervals on the roller surfaces. The arrangement of the protruding portions is not limited to this, and the arrangements of the protruding portions formed in the upper shaping roller pair 41 and the lower shaping roller pair 42 may be different from each other. Further, the arrangements of the protruding portions formed on the respective shaping rollers 40 may be different from each other.

A roller-to-roller distance adjustment unit (not illustrated) for varying a roller-to-roller distance between the upper shaping roller pair 41 is provided inside the food shaping apparatus 1. The roller-to-roller distance adjustment unit includes, for example, a swing arm rotatably attached in the apparatus main body and a crank arm having one end connected to the swing arm and the other end connected to the drive motor. When the drive motor rotates in one direction, the swing arm rotates in the right direction, and the roller-to-roller distance of the upper shaping roller pair 41 increases. When the drive motor rotates in the opposite direction, the swing arm rotates in the left direction, and the roller-to-roller distance of the upper shaping roller pair 41 decreases. The mechanism for adjusting the distance between the rollers of the upper shaping roller pair 41 is not limited to the above-described configuration, and any configuration can be adopted.

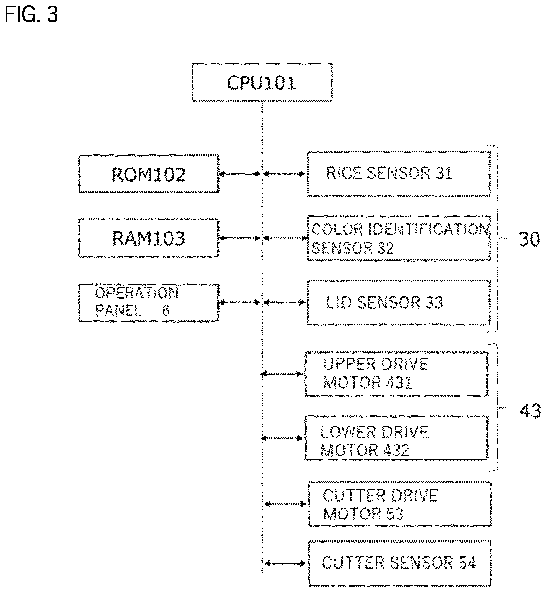

As illustrated in Fig. 2, the cutting unit 5 is a mechanism for cutting the extended rice plate at a predetermined length, and is provided below the lower shaping roller pair 42, that is, a discharge port of the shaping unit 4. The cutting unit 5 mainly includes a guide plate 51 and a cutter 52. The guide plate 51 is provided adjacent to an outlet of the lower shaping roller pair 42. The cutter 52 advances and retracts with respect to the guide plate 51 via a cutter drive motor 53 (see Fig. 3).

With this configuration, the rice plate extended by the lower shaping roller pair 42 is carried along the guide plate 51 and sent to a position to be cut by the cutter 52. The cutter 52 moves downward toward the guide plate 51 after the rice plate is fed out by a predetermined length. As a result, the cutter 52 is pressed against the rice plate, and the rice plate is cut.

As illustrated in Figs. 1 and 2, a slide tray 11 is provided below the cutter 52. The slide tray 11 is horizontally provided so as to penetrate the inside of the apparatus body from the back side toward the front side of the food shaping apparatus 1. The slide tray 11 advances and retracts in forward and backward direction (in the y direction) in conjunction with the shaping rollers 40 or the cutter 52. A means of moving the slide tray 11 may be, for example, a rack and pinion mechanism, or an appropriate configuration such as a linear drive system can be adopted.

The operation panel 6 is an operation tool for operating the food shaping apparatus 1. According to the present embodiment, the operation panel 6 is provided on the left side of the front surface of the food shaping apparatus 1, and is provided with various setting buttons and a display for setting the amount of cooked rice, the number of times to shape a rice plate, and the like, a power switch, an emergency stop switch, and the like. According to the present embodiment, the operation panel 6 includes a liquid crystal screen, but the technical scope of the present invention is not limited thereto, and may be configured by, for example, a 7-segment display or an appropriate lamp. Further, the operation panel 6 may be formed with a touch panel display.

### • Function block

Fig. 3 is a block diagram illustrating a configuration of the food shaping apparatus 1. The food shaping apparatus 1 mainly includes a CPU 101, a ROM 102, a RAM 103, the operation panel 6, a sensor unit 30, a roller drive motor group 43, the cutter drive motor 53, and a cutter sensor 54.

The CPU 101 is a central processing unit that controls the operation of the food shaping apparatus 1, and reads and executes a program from the ROM 102 to implement the operation of the food shaping apparatus 1 according to the program. The ROM 102 is a read-only memory, and stores the program. The RAM 103 is a random access memory, and stores temporary data and the like.

The sensor unit 30 detects cooked rice fed to the shaping unit 4 near the open end on the lower side of storage unit 21. The sensor unit 30 includes, for example, a rice sensor 31, a color identification sensor 32, and a lid sensor 33. The rice sensor 31 is a sensor that detects that cooked rice has supplied in the storage unit 21. The color identification sensor 32 is a sensor that identifies the color of the supplied cooked rice. The lid sensor 33 is a sensor provided on the storage container 23 or the lid 23a, and detects that the storage container 23 is closed by the lid 23a. Note that the rice sensor 31 and the color identification sensor 32 may be constituted by one member.

The roller drive motor group 43 is a drive mechanism that rotates the shaping rollers 40. The roller drive motor group 43 includes, for example, an upper drive motor 431 that drives the upper shaping roller pair 41 and a lower drive motor 432 that drives the lower shaping roller pair 42. The roller drive motor group 43 controls the start and stop of rotation of the shaping rollers 40 and the number of the rotations. Further, the roller drive motor group 43 may control the rotation direction of the shaping rollers 40. The upper drive motor 431 may control the first upper shaping roller 41a and the second upper shaping roller 41b independently of each other. Further, the lower drive motor 432 may control the first lower shaping roller 42a and the second lower shaping roller 42b independently of each other. The motors constituting the roller drive motor group 43 are, for example, stepping motors.

The cutter drive motor 53 is a mechanism that advances and retracts the cutter 52 according to rotational movement. The cutter 52 repeats advancing movement and retracting movement according to forward rotation of the cutter drive motor 53. The cutter 52 also repeats advancing movement and retracting movement according to reverse rotation of the cutter drive motor 53. The forward rotation is an example of a first rotation in the claims. The reverse rotation is an example of the second rotation in the claims.

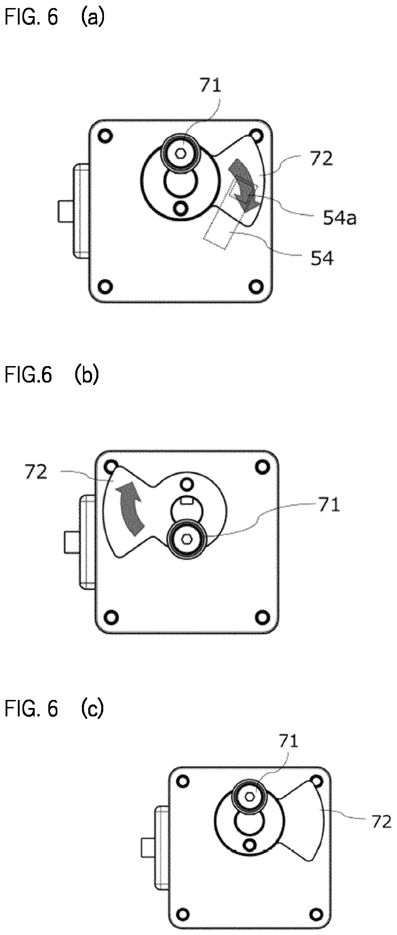

The cutter sensor 54 is a sensor that detects a position of the cutter 52. The cutter sensor 54 detects a cam follower 71 that rotates according to the cutter drive motor 53. As illustrated in Fig. 6(a), the cam follower 71 is a member having a shape in which a substantially disk-shaped plate and a fan-shaped detection plate 72 are combined, and the detection plate 72 extends outward in the rotation direction of the cam follower 71. The cam follower 71 is interlocked with the cutter drive motor 53, and when the cutter drive motor 53 makes one rotation, the cutter 52 makes one vertical reciprocation. The correspondence relationship between the number of rotations and the reciprocating motion of the cutter 52 is an example.

The cutter sensor 54 is, for example, an object detection sensor, and a predetermined point on the rotation path of the detection plate 72 is a detection region 54a of the cutter sensor 54. In other words, the cutter sensor 54 detects that the cam follower 71 has reached the predetermined angle. In the following description, the angle of the cam follower 71 at which the detection plate 72 is detected by the cutter sensor 54 is also referred to as an initial position.

### • Functional units

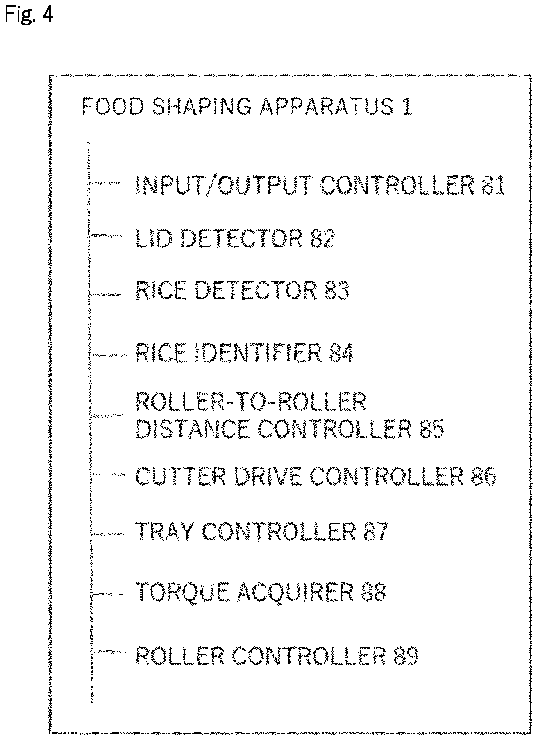

As illustrated in Fig. 4, the food shaping apparatus 1 includes, for example, an input/output controller 81, a lid detector 82, a rice detector 83, a rice identifier 84, a roller-to-roller distance controller 85, a cutter drive controller 86, a tray controller 87, a torque acquirer 88, and a roller controller 89, which are functional units implemented by a computing device such as the CPU 101 and a memory such as the ROM 102 and the RAM 103. Some or all of the functional units may be implemented in a host device connected in a wired or wireless manner. The host device may be, for example, a server or a cloud computer.

The input/output controller 81 is a functional unit that acquires a command received via the operation panel 6. The input/output controller 81 receives not only a shaping start command but also a setting such as a thickness of a plate-shaped cooked rice or a density of cooked rice to be shaped. The input/output controller 81 outputs appropriate information on the liquid crystal screen of the operation panel 6. On the liquid crystal screen, for example, an operation mode set in the food shaping apparatus 1 is displayed. Further, an appropriate error message may be displayed on the liquid crystal screen.

The lid detector 82 is a functional unit that detects that the lid 23a of the storage container 23 is closed via the lid sensor 33. In a case where the lid sensor 33 detects that the lid 23a is closed, the input/output controller 81 may receive a command to start shaping by the food shaping apparatus 1. In addition, in a case where the lid 23a is not closed, the input/output controller 81 may prohibit or disable the input of the command to start shaping. In this case, the input/output controller 81 may display, on the liquid crystal screen, a message asking a user to close the lid 23a. According to such a configuration, shaping can be started in a state where the lid 23a is reliably closed.

The rice detector 83 is a functional unit that detects that cooked rice has supplied in the storage unit 21 via the rice sensor 31. The input/output controller 81 may receive a command to start shaping by the food shaping apparatus 1 in a case where cooked rice has supplied to the storage unit 21, and may prohibit or disable input of the start command in a case where cooked rice has not supplied.

The rice identifier 84 is a functional unit that identifies the type of cooked rice in the storage unit 21. The rice identifier 84 may identify the color of the cooked rice in the storage unit 21 via the color identification sensor 32. Further, the rice identifier 84 may identify the type of cooked rice by applying an appropriate image analysis technique to a photograph of the cooked rice. The type of cooked rice may include information on the variety of cooked rice, the degree of milling, or the presence or absence or type of a mixture. For example, the rice identifier 84 identifies whether the cooked rice is white rice or brown rice.

The roller-to-roller distance controller 85 is a functional unit that controls the roller-to-roller distance adjustment unit to control the distance between the first upper shaping roller 41a and the second upper shaping roller 41b or the distance between the first lower shaping roller 42a and the second lower shaping roller 42b. When the roller-to-roller distance changes, the thickness of the produced rice plate changes.

The roller-to-roller distance controller 85 changes the roller-to-roller distance based on a command input via the input/output controller 81. The roller-to-roller distance controller 85 changes the roller-to-roller distance according to, for example, the set thickness of the plate-shaped cooked rice. Further, the roller-to-roller distance controller 85 may change the roller-to-roller distance according to the type of cooked rice identified by the rice identifier 84. In this case, the roller-to-roller distance controller 85 refers to a table in which the type of cooked rice and the roller-to-roller distance are associated with each other, and determines the roller-to-roller distance. The table is stored in, for example, a memory such as the ROM 102 or the RAM 103 included in the food shaping apparatus 1, or an external device appropriately connected to the food shaping apparatus 1 in a wired or wireless manner.

The cutter drive controller 86 is a functional unit that advances and retracts the cutter 52 by controlling the cutter drive motor 53. The cutter drive controller 86 rotates the cutter drive motor 53 forward or reversely. The cutter 52 is made to repeat advancing movement and retracting movement according to the forward rotation or reverse rotation of the cutter drive motor 53.

Whether the cutter 52 advances or retracts according to the forward rotation and the reverse rotation of the cutter drive motor 53 depends on the rotation angle of the cutter drive motor 53 at that time. For example, in a case where the cutter drive motor 53 is rotated reversely at the time when the cutter 52 is advancing in conjunction with the forward rotation of the motor, this causes the cutter 52 to retract. In a case where the cutter drive motor 53 is rotated reversely at the time when the cutter 52 is retracting in conjunction with the forward rotation of the motor, this causes the cutter 52 to advance. According to the present embodiment, the advancing of the cutter 52 corresponds to lowering of the cutter 52, and the retracting of the cutter 52 corresponds to rising of the cutter 52. The rice plate discharged from the discharge port is located below the cutter 52, and when the cutter 52 advances and lowers, the cutter 52 is pressed against the rice plate.

The cutter drive controller 86 may vary the mode of the advancing and retracting movement of the cutter 52 according to the result of the identification by the rice identifier 84. In a case where the cooked rice is identified as white rice, the cutter drive controller 86 presses the cutter 52 once against the rice plate. On the other hand, in a case where the cooked rice is identified as brown rice, the cutter drive controller 86 presses the cutter 52 twice against a same place of the rice plate. According to this configuration, a rice plate of white rice that can be cut by one pressing movement can be quickly generated by a simple process, while a rice plate of relatively hard brown rice can be reliably cut by two pressing movements.

The tray controller 87 is a functional unit that advances and retracts the slide tray 11 by controlling an appropriate moving means connected to the slide tray 11. The slide tray 11 operates in conjunction with the shaping rollers 40 or the cutter 52. The operation timing of the slide tray 11 will be described later.

The torque acquirer 88 is a functional unit that acquires load torque of the roller drive motor group 43 that drives the shaping rollers 40. The torque acquirer 88 acquires load torque of the lower drive motor 432 that drives at least one of the lower shaping roller pair 42. The torque acquirer 88 acquires torque by counting the number of pulses according to the load output from the motor driver to which the roller drive motor group 43 is connected, for example.

The roller controller 89 is a functional unit that controls the rotation of the shaping rollers 40. The roller controller 89 controls the roller drive motor group 43 to rotate the upper shaping roller pair 41 and the lower shaping roller pair 42 independently of each other. When the rotational speed of the shaping rollers 40 changes, the density of the rice plate changes.

The roller controller 89 changes the rotation speed of the upper shaping rollers 41a and 41b according to the load torque applied to the lower drive motor 432 of the lower shaping roller 42a or 42b measured by the torque acquirer 88. The roller controller 89 reduces the rotation speed of the upper shaping roller pair 41 in a case where the load torque is equal to or greater than a set range. The roller controller 89 increases the rotation speed of the upper shaping roller pair 41 in a case where the load torque is less than the set range. The set range is, for example, a predetermined range set in advance. The set range may be changed by an operator based on the type of cooked rice to be supplied.

The load torque increases when cooked rice is clogged between the shaping rollers 40, for example, between the upper shaping roller pair 41 and the lower shaping roller pair 42. When the operation is resumed after the operation is stopped with the cooked rice being stored in the storage unit 21, the cooked rice remaining between the shaping rollers 40 becomes hard by its own weight. As a result, the load torque at the time of restarting the operation increases. Furthermore, the load torque is highly likely to increase in the operation immediately after the thickness of cooked rice set on operation panel 6 is changed from a thick setting to a thin setting.

As a result of the overload of the load torque due to such a factor, tooth skipping of the feed gear connecting the roller drive motor group 43 and the shaping rollers 40 may occur. Accordingly, there has been a case where the cooked rice is crushed by being shaped with high load torque, or unevenness in the density of the rice plate occurs. In a case where the load torque is large, the rotational speed of the upper shaping roller pair 41 is lowered to reduce the amount of fed cooked rice from the storage unit 21 and send out cooked rice filled between the upper shaping roller pair 41 and the lower shaping roller pair 42. With this configuration, an increase in load torque and tooth skipping of the feed gear can be prevented. As a result, the density of the rice plate can be made uniform. Further, the cooked rice can be shaped without being crushed.

The roller controller 89 may stop the upper shaping roller pair 41 in a case where the load torque applied to the lower drive motor 432 of the lower shaping roller 42a or 42b is equal to or greater than a predetermined first threshold value. At this time, the roller controller 89 may continue the rotation of the lower shaping roller pair 42. When only the lower shaping roller pair 42 rotates, the cooked rice filled between the upper shaping roller pair 41 and the lower shaping roller pair 42 is carried by the lower shaping roller pair 42 and discharged downward. As a result, the filled cooked rice is eliminated, and the load applied to the roller drive motor group 43 is reduced.

Conventionally, the operator of the food shaping apparatus 1 has been needed to manually adjust parameters such as the rotation speed of the shaping rollers 40 or the roller-to-roller distance in order to appropriately adjust the density of the rice plate. In addition, the operator has been needed to repeatedly shape the rice plate and adjust the parameters to appropriate parameters while visually checking the state of the rice plate, and it was difficult to immediately perform appropriate adjustment. Furthermore, the adjustment required knowledge of a skilled operator. On the other hand, according to the series of processing of the roller controller 89, the load torque applied to the lower drive motor 432 can be automatically kept constant, so that the operation by the operator can be simplified. In addition, uniform density of the rice plate can be achieved even by an operator who is not familiar with the operation.

### • First operation: state of single cutting

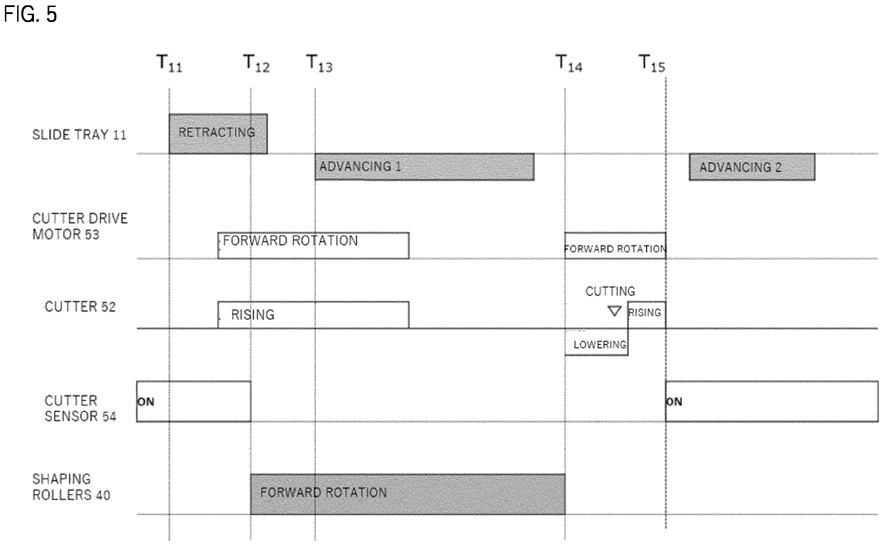

Here, with reference to Figs. 5 to 7, a first operation of the processing in which the cutting unit 5 cuts the rice plate will be described. In the first operation, the cutter 52 moves upward and downward once when cutting one rice plate. Note that the number of the rice plates may be counted by an appropriate counter regardless of the impression of the shape, and may be counted as one piece, two pieces, etc. or one sheet, two sheets, etc. for example.

As illustrated in Figs. 5 and 6(a), in the initial state, the cam follower 71 stops at the angle at which the detection plate 72 is detected by the cutter sensor 54, that is, at the initial position. For example, when an input of a rice plate shaping command is received via the operation panel 6, the slide tray 11 retracts (T₁₁). In addition, the cutter 52 starts forward rotation, that is, clockwise rotation in the drawing. When the rotation is greater than or equal to a predetermined amount, the detection plate 72 moves outside of the detection region 54a, and the cutter sensor 54 is turned off. When the cutter sensor 54 is turned off, the shaping rollers 40 start to rotate forward (T₁₂).

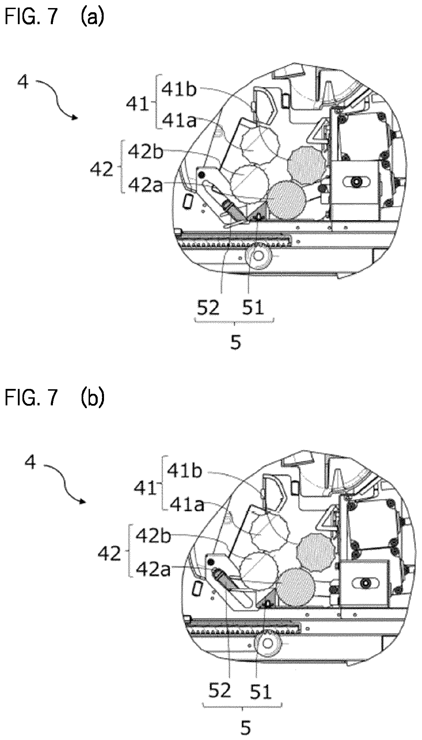

As illustrated in Fig. 5, the cutter drive motor 53 of the cutter 52 stops after rotating for a predetermined period of time. At this time, the cam follower 71 is in the state of Fig. 6(b). The cutter 52 is in a raised state as illustrated in Fig. 7(b). Thereafter, the shaping rollers 40 rotate forward to shape and push out the rice plate to the discharge port. Meanwhile, the slide tray 11 advances in the -y direction (T₁₃), and the rice plate is placed on the slide tray 11.

After the slide tray 11 is stopped, the forward rotation of the shaping rollers 40 is stopped after a predetermined period of time. When the forward rotation of the shaping rollers 40 is stopped, the cutter drive motor 53 of the cutter 52 rotates forward (T₁₄). Accordingly, the cutter 52 is lowered. By lowering the cutter 52, the rice plate is cut. At this time, as illustrated in Fig. 7(a), the cutter 52 is in contact with the guide plate 51 placed below.

After the cutter 52 lowers, the cutter drive motor 53 continues driving, and the cutter 52 rises. The cutter drive motor 53 stops when the cutter 52 reaches the initial position and the cutter sensor 54 is turned ON (T₁₅). At this time, the cam follower 71 is in the state of Fig. 6(c). In addition, the cutter 52 is in the state of Fig. 7(a).

### • Second operation: state of double cutting

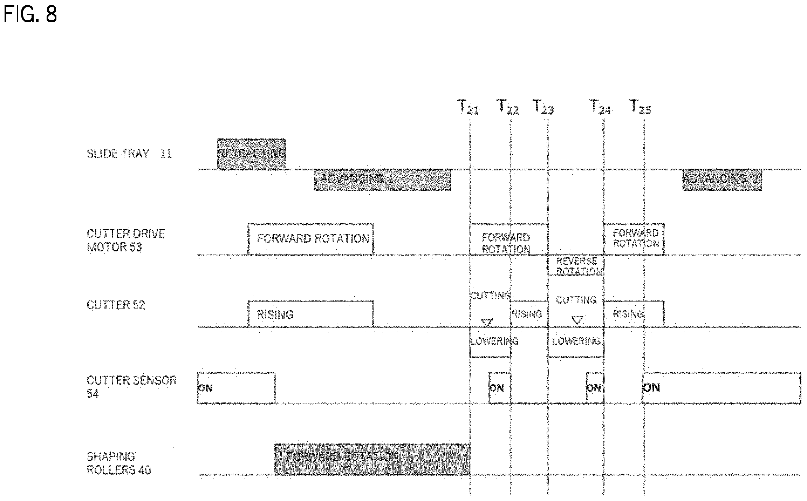

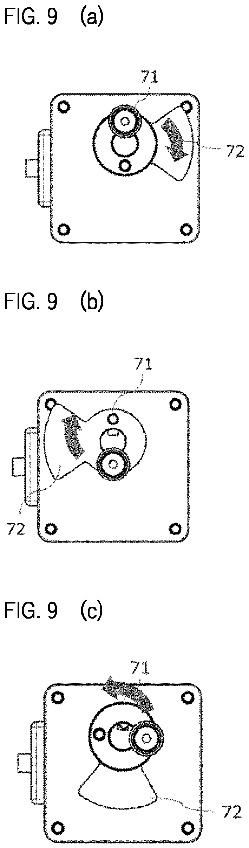

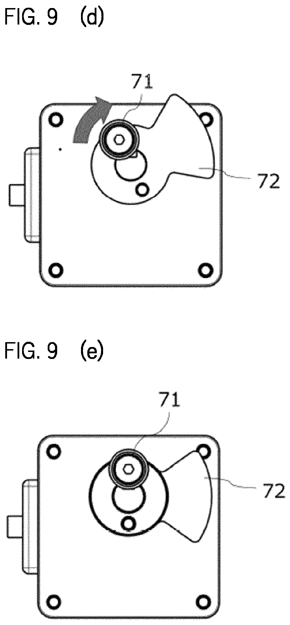

Next, a second operation of the process in which the cutting unit 5 cuts a rice plate will be described with reference to Figs. 8 and 9. In the second operation, an operation of pressing the cutter 52 to a same place is performed multiple times when cutting one rice plate. Note that description of processing similar to the first operation will be omitted as appropriate.

As illustrated in Fig. 9(a), the cam follower 71 is held at the initial position in the initial state. When the forward rotation of the shaping rollers 40 stops, the cutter drive motor 53 starts the forward rotation, and accordingly, the cutter 52 lowers and presses the rice plate (T₂₁ in Fig. 8). The cutter drive motor 53 continues to rotate forward until the cutter 52 retracts in a direction away from the discharge port. As a result, the cam follower 71 passes through the lowest point as illustrated in Fig. 9(b) and rises again (T₂₂).

The amount of rise of the cutter 52 from T₂₂ to T₂₃ is slight, and is sufficiently lower than the point at which the cutter rises the most. For example, the width of the gap between the cutter 52 and the guide plate 51 at T₂₃ is narrower than the thickness of the rice plate. If the gap between the cutter 52 and the guide plate 51 is wide at the time of T₂₃, the rice plate above the cutter 52 slides down through the gap by its own weight before the second pressing. This causes that the first pressed position and the second pressed position are displaced from each other, and a thin thread-like rice is formed. On the other hand, according to the configuration of the present application, since the rice plate above the cutter 52 does not slide down through the gap by its own weight, the same place can be reliably pressed.

Next, the cutter drive motor 53 reversely rotates for a predetermined period of time (T₂₃). With this operation, the raised cutter 52 lowers according to the reverse rotation of the cutter drive motor 53. As illustrated in Fig. 9(c), the cam follower 71 lowers and then shifts to rise, and passes through the initial position. The slide tray 11 advances and stops during the forward rotation of the shaping rollers 40. In other words, the slide tray 11 stops during the lowering of the cutter 52 by the forward rotation and the lowering of the cutter 52 by the reverse rotation. With this configuration, the cutter 52 presses the same place of the rice plate twice.

The cutter drive motor 53 rotates reversely for a predetermined period of time and then rotates forward (T₂₄). With this operation, the cutter 52 rises as illustrated in Fig. 9(d). When the cutter sensor 54 is turned ON (T₂₅), the cutter 52 stops. As illustrated in Fig. 9(e), the cam follower 71 is held at the initial position. Then, the slide tray 11 advances, and the cut rice plate is carried forward of the apparatus.

Note that the pressing operation may be performed three or more times by repeating T₂₂ to T₂₄ subsequent to T₂₄.

In a case where a hard rice plate made of brown rice or the like or a highly viscous rice plate is cut, the rice plate cannot be cut by only pressing the cutter 52 once, and there is a case where the rice plate is torn off at an unintended place or the cooked rice is stuck to the cutter 52. As in the second operation, by pressing the cutter 52 multiple times against the same place of the rice plate, even a hard rice plate can be reliably cut.

In addition, if it takes time to cut the hard rice plate multiple times, there is a possibility that the cooked rice that has not been cut until the second and subsequent cutting operations is torn off by gravity or the like. On the other hand, according to the configuration in which the cutter 52 lowers at least once according to the forward rotation and the cutter 52 lowers at least once according to the reverse rotation with respect to a set of cooked rice, the set of cooked rice can be quickly pressed multiple times. As a result, it is possible to reliably cut at an intended place even in a case of a rice plate such as kimbap which is mixed with oil and easily slips, or a highly viscous rice plate made of brown rice or the like.

Furthermore, with the configuration in which the cutter drive motor 53 stops when the detection plate 72 advances in the forward rotation through the detection region 54a of the cutter sensor 54, a leading end cross section of following cooked rice to be discharged faces upward. Accordingly, the cooked rice is less likely to adhere to the side surface of cutter 52 even after a lapse of time in a state where cooked rice is stored in storage unit 21. Therefore, even when the shaping operation is resumed, the rice plate is not lifted along with the rise of the cutter 52, and as a result, it is possible to shape a flat rice plate by preventing the tip from twisting or the like.

### • Third operation: state of cutting twice and stopping reverse rotation

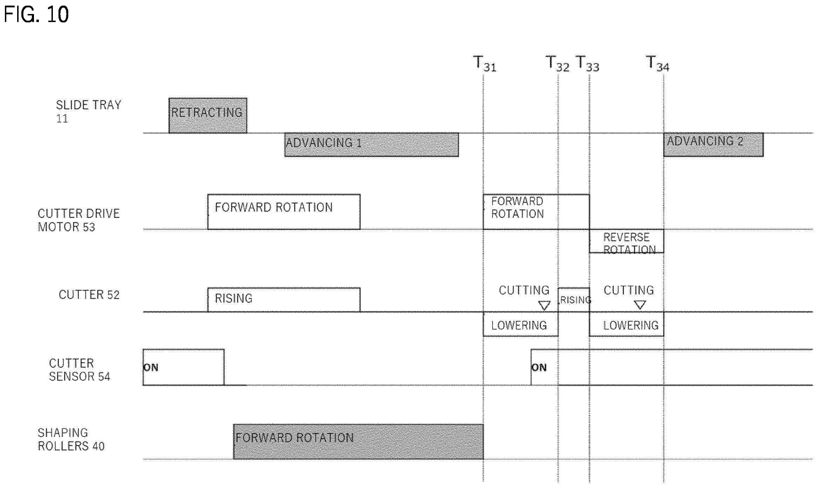

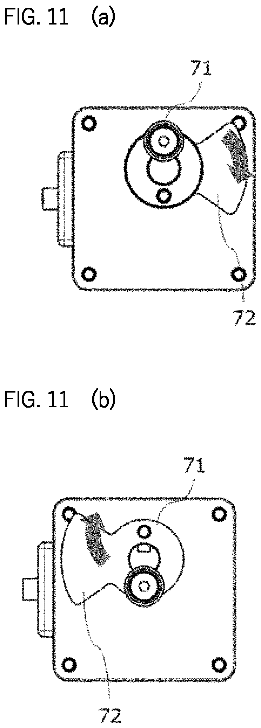

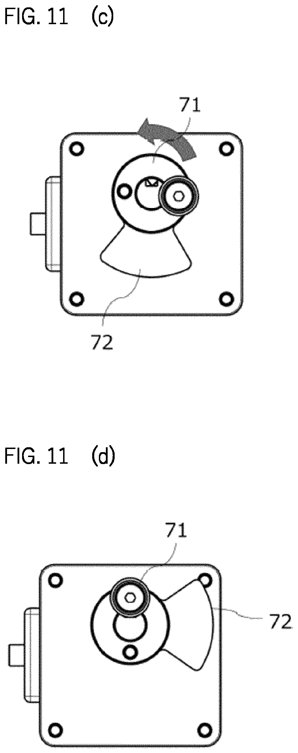

Next, with reference to Figs. 10 and 11, a third operation of the processing in which the cutting unit 5 cuts the rice plate will be described. Note that description of the processing similar to the second operation will be omitted as appropriate. As illustrated in Fig. 11(a), the cam follower 71 is held at the initial position in the initial state. When the forward rotation of the shaping rollers 40 stops, the cutter drive motor 53 rotates forward, so that the cutter 52 starts to lower (T₃₁). The cutter 52 is pressed against the rice plate, and then turns to rise (T₃₂). The cam follower 71 rises as illustrated in Fig. 11(b).

When the cam follower 71 reaches the initial position by the cutter drive motor 53, the cutter sensor 54 is turned ON, and the cutter drive motor 53 starts reverse rotation (T₃₃). As a result, the cutter 52 lowers, is pressed against the rice plate again, cuts the rice plate, and stops after a predetermined period of time (T₃₄). The cam follower 71 is held at the initial position as illustrated in Fig. 11(d).

As described above, according to the configuration in which the cutter 52 stops when the cam follower 71 reaches the initial position according to the reverse rotation of the cutter drive motor 53, it is not necessary to perform the forward rotation again after the second cutting, so that the cutting can be performed in a short time.

### • Flowchart

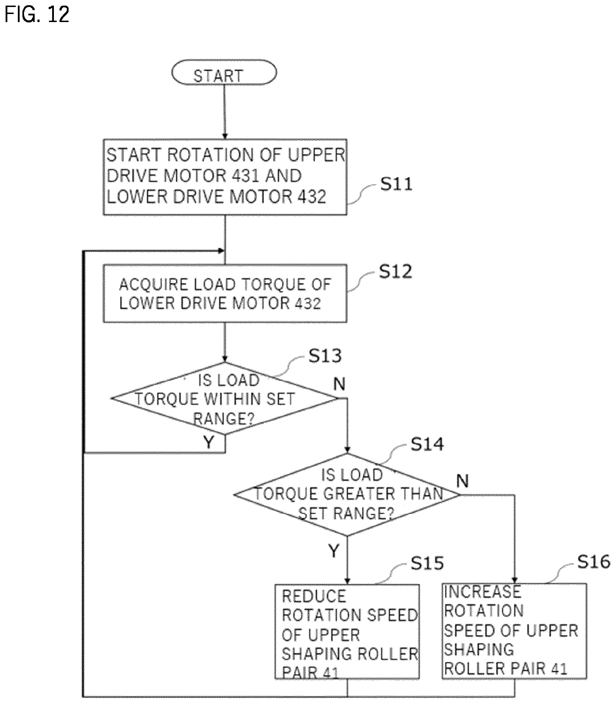

Here, an example of a processing flow of adjusting the rotation speed of the upper shaping roller pair 41 according to the load torque in the shaping processing by the shaping rollers 40 will be described with reference to Fig. 12.

First, the roller controller 89 starts rotation of the upper drive motor 431 of the upper shaping roller pair 41 and the lower drive motor 432 of the lower shaping roller pair 42 (step S11). Next, the torque acquirer 88 acquires the load torque of the lower drive motor 432 (step S12). It is determined whether the load torque is within a set range, and in a case where the load torque is within the range (Y in step S13), the process returns to step S12.

In a case where the load torque is out of the set range (N in step S13), the process proceeds to step S14. In a case where the load torque is greater than the set range (Y in step S14), the upper drive motor 431 is controlled to reduce the rotation speed of the upper shaping roller pair 41 (step S15). In a case where the load torque is lower than the set range (N in step S14), the upper drive motor 431 is controlled to increase the rotation speed of the upper shaping roller pair 41 (step S16).

With such a configuration, the load torque of the lower drive motor 432 can be maintained in a certain range, and a uniform rice plate can be formed.

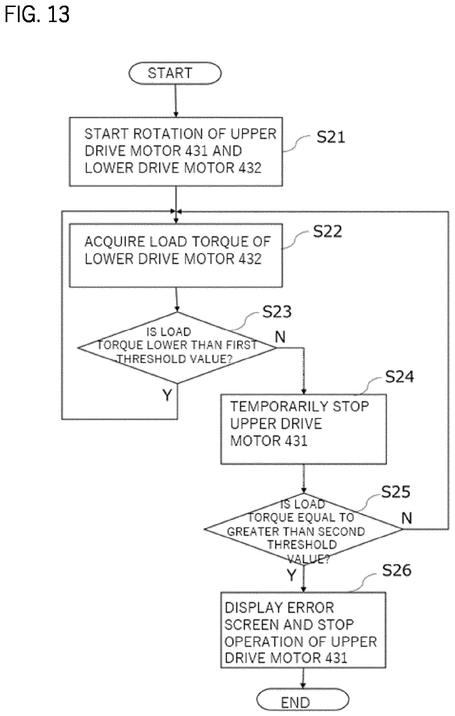

Next, an example of a processing flow of stopping the upper shaping roller pair 41 according to the load torque in the shaping processing by the shaping rollers 40 will be described with reference to Fig. 13.

First, the roller controller 89 starts rotation of the upper drive motor 431 of the upper shaping roller pair 41 and the lower drive motor 432 of the lower shaping roller pair 42 (step S21). Next, the torque acquirer 88 acquires the load torque of the lower drive motor 432 (step S22). In a case where the load torque is lower than a predetermined first threshold value (Y in step S23), the process returns to step S22.

When the load torque of the lower drive motor 432 is greater than or equal to the first threshold value (N in step S23), the upper drive motor 431 temporarily stops (step S24). Next, the load torque is acquired again, and it is determined whether the load torque is equal to or larger than a second threshold value that is larger than the first threshold value (step S25). In a case where the load torque is less than the second threshold value (N in step S25), the process returns to step S22. With such processing, by stopping only upper drive motor 431 and driving lower drive motor 432, it is possible to send out cooked rice filled between shaping rollers 40 and reduce the load torque.

In a case where the load torque is equal to or greater than the second threshold value (Y in step S25), an error screen is displayed on the operation panel 6, and the operation of the upper drive motor 431 stops (step S26). The second threshold value is, for example, a load torque at which tooth skipping of the feed gear occurs. With this configuration, it is possible to prevent that a rice plate is shaped in a state where the feed gear skips teeth, and a uniform rice plate is surely shaped.

According to the embodiment described above, it is possible to provide a food shaping apparatus capable of reliably cutting cooked rice shaped in a plate shape.

### Reference Signs List

- 1: Food shaping apparatus
- 2: Hopper
- 4: Shaping unit
- 40: Shaping roller
- 41: Upper shaping roller pair
- 42: Lower shaping roller pair
- 43: Roller drive motor group
- 5: Cutting unit
- 52: Cutter
- 53: Cutter drive motor

## Claims

1. A food shaping apparatus that shapes a plate-shaped article having a predetermined length, the food shaping apparatus comprising:
a shaping unit that shapes cooked rice supplied from a hopper into a plate shape; and
a cutting unit that cuts the shaped cooked rice by advancing and retracting a cutter at a discharge port of the cooked rice shaped by the shaping unit, wherein
the cutting unit presses the cutter multiple times at a same place in one plate-shaped article.

2. The food shaping apparatus according to claim 1, further comprising
a slide tray that advances and retracts in a front-rear direction below the discharge port and on which the shaped cooked rice is placed, wherein
the slide tray stops during the multiple times of the pressing.

3. The food shaping apparatus according to claim 1 or 2, wherein
the cutting unit includes a cutter drive motor that advances and retracts the cutter according to rotational movement, and
the cutter drive motor presses the cutter against the cooked rice at least one time by a first rotation and presses the cutter against the cooked rice at least another time by a second rotation opposite to the first rotation in an operation of shaping one plate-shaped article.

4. The food shaping apparatus according to claim 3, wherein
the cutter drive motor advances the cutter toward the discharge port by the first rotation, continues the first rotation until the cutter retracts in a direction away from the discharge port, and then advances the cutter toward the discharge port by the second rotation.

5. The food shaping apparatus according claim 1, wherein
the shaping unit includes:
an upper shaping roller that comes into contact with the cooked rice and extends the cooked rice by pressure;
a lower shaping roller disposed to face the upper shaping roller;
a torque acquirer that measures a load torque of a roller drive motor that drives the lower shaping roller; and
a roller controller that controls operation of the upper shaping roller, and
the roller controller changes a rotation speed of the upper shaping roller according to the load torque.

6. The food shaping apparatus according to claim 5, wherein
the roller controller stops the upper shaping roller in a case where the load torque is equal to or greater than a threshold value.

7. A control method of a food shaping apparatus, the food shaping apparatus shaping a plate-shaped article having a predetermined length and including:
a shaping unit that shapes cooked rice supplied from a hopper into a plate shape; and
a cutting unit that cuts the shaped cooked rice by advancing and retracting a cutter at a discharge port of the cooked rice shaped by the shaping unit,
the control method comprising
processing of pressing the cutter multiple times at a same place in one plate-shaped article.

8. A control program of a food shaping apparatus, the food shaping apparatus shaping a plate-shaped article having a predetermined length and including:
a shaping unit that shapes cooked rice supplied from a hopper into a plate shape; and
a cutting unit that cuts the shaped cooked rice by advancing and retracting a cutter at a discharge port of the cooked rice shaped by the shaping unit,
the control program causing a computer to execute
processing of pressing the cutter multiple times at a same place in one plate-shaped article.
